Europäisches Patentamt

European Patent Office

Office européen des brevets

(19)

(11) Veröffentlichungsnummer : **0 503 296 B1**

(12) # EUROPÄISCHE PATENTSCHRIFT

(45) Veröffentlichungstag der Patentschrift :
**03.08.94 Patentblatt 94/31**

(51) Int. Cl.$^5$ : **B60C 23/04**

(21) Anmeldenummer : **92102382.6**

(22) Anmeldetag : **13.02.92**

(54) **Vorrichtung zum Überwachen des Luftdruckes eines Fahrzeugrades.**

(30) Priorität : **14.03.91 DE 4108338**

(43) Veröffentlichungstag der Anmeldung :
**16.09.92 Patentblatt 92/38**

(45) Bekanntmachung des Hinweises auf die
Patenterteilung :
**03.08.94 Patentblatt 94/31**

(84) Benannte Vertragsstaaten :
**AT BE CH DE DK ES FR GB GR IT LI LU MC NL
PT SE**

(56) Entgegenhaltungen :
**EP-A- 0 265 296
DE-A- 3 821 156
US-A- 2 316 461**

(73) Patentinhaber : **Alligator Ventilfabrik GmbH
Alleenstrasse 1
D-89537 Giengen (DE)**

(72) Erfinder : **Lubitzsch, Wolfgang, Dipl.-Ing. Dr.
Auf dem Kreuz 9
W-7900 Ulm (DE)**
Erfinder : **Bänziger, Fritz
Fischergasse 1
W-7900 Ulm (DE)**
Erfinder : **Reinhardt, Rolf
Kettelerweg 7
W-7928 Giengen (DE)**

(74) Vertreter : **Hiebsch, Gerhard F., Dipl.-Ing. et al
Hiebsch & Peege,
Patentanwälte,
Postfach 464
D-78204 Singen (DE)**

EP 0 503 296 B1

## Beschreibung

Die Erfindung betrifft eine Vorrichtung zum Überwachen des Luftdruckes im Reifeninnenraum eines von der Felge eines Fahrzeugrades getragenen Luftreifens nach dem Oberbegriff des Patentanspruches 1.

Eine solche Vorrichtung ist aus der DE-A-38 21 156 bekannt. Bei dieser bekannten Vorrichtung ist ein Druckzylinder parallel zum Achszapfen im Bremsscheibentopf angeordnet und greift mit seinem fahrzeugäußeren Ende in einen Druckmittel- oder Luftführungskanal dichtend ein, der an der Felge derart angeformt ist, daß in ihm stets der Reifendruck herrscht. Im Druckzylinder sind innerhalb des Druckmittelkanals radiale Durchlässe vorgesehen, durch die der Druck in das Innere des Druckzylinders gelangen kann. Auch ist nach dieser DE-A-38 21 156 auch daran gedacht, mittels eines Schlauches den Druckzylinder mit dem Reifen zu verbinden.

Der Druckzylinder hat an einem Ende einen Permanentmagneten, welcher sich bei Drehung des Rades an einem Magnetsensor vorbeibewegt. Bei zu geringem Reifendruck wird im Druckzylinder ein Kolben vom Permanentmagneten wegbewegt, so daß sich die Feldstärke sprunghaft ändert.

Bei dieser bekannten Vorrichtung ist keine Vorsorge getroffen, wie das Abströmen von Reifenluft bei demontiertem Rad unterbunden werden soll. Ein Füllventil für den Reifen ist nach dieser Schrift nicht angesprochen.

Angesichts dieses Standes der Technik hat sich der Erfinder das Ziel gesetzt, die erkannten Nachteile zu vermeiden und insbesondere ein Abströmen von Reifenluft durch die an oder in der Felge verlaufende Luftführung zu unterbinden.

Die Lösung dieser Aufgabe besteht in den kennzeichnenden Merkmalen des Patentanspruches 1.

Besondere erfinderische Weiterbildungen sind in den Unteransprüchen gekennzeichnet.

Um das Fahrzeugrad bei seiner Montage als druckdichte Einheit zu erhalten, wird bevorzugt die druckdichte Verbindung zwischen dem Kanal bzw. der Radbohrung und dem Druckgeber nach der Radmontage über einen zugeordneten O-Ring hergestellt. Zum Absperren des Kanals bei der Demontage des Rades kann ein Rückschlagventil vor dem Druckgeber dienen; mit ihm wird ein Abströmen von Reifenluft durch den Kanal sicher vermieden. Nach vorschriftsmäßiger Montage des Rades und einer Abdichtung durch den O-Ring wird das Rückschlagventil automatisch geöffnet und somit eine Verbindung zwischen Reifeninnenseite und Druckgeber hergestellt.

Die Bremseinrichtung kann eine Bremsscheibe oder eine Bremstrommel sein, jedoch hat es sich auch als günstig erwiesen, etwa die Zähne einer Zahnscheibe eines ABS-Bremssystems von dem Druckgeber durchgreifen zu lassen.

Die Luft wird aus dem Reifeninnenraum über den Kanal in der Felge und über den Ventileinsatz in den Druckgeber geleitet; in diesem wird dann die Größe "Druck" in eine andere physikalische Größe umgewandelt, beispielsweise in eine Magnetkraft. Ein feststehender Signalaufnehmer empfängt die druckabhängigen Signale und wandelt sie in eine druckabhängige elektrische Größe um, die dann im Fahrzeug weiter verarbeitet wird - etwa durch die bereits erwähnte Auswerteinrichtung.

Von besonderer Bedeutung ist auch das Verlegen des Reifenfüllventils aus dem äußeren Bereich der Felge in eine wesentlich engere Achsnähe; damit werden u.a. mechanische Beanspruchungen erheblich vermindert, die Reifenbefüllung wesentlich erleichtert und die Gefahr der Verschmutzung reduziert.

Zum Stand der Technik wurde noch die US-A-2 316 461 ermittelt. Sie beschreibt eine Signaleinrichtung für den Reifendruck, die einen Reifenunterdruck anzeigen soll und die für Lastwagen konzipiert ist. Ein Druckgeber ist nahe der Radachse angeordnet und mit dem Reifeninnenraum beider Luftreifen durch eine an der Felge verlaufende Luftführung aus flexiblem Werkstoff verbunden. Wichtig ist bei dieser Schrift, daß beide Luftreifen des Lastwagens gleichzeitig über ein einziges Ventil aufgeblasen werden können.

Das Füllventil nach dieser US-A-2 316 461 ist in Abstand zum Felgenbett nahe der Radachse vorgesehen und durch besagte flexible Luftführung mit dem Reifeninnenraum beider Reifen verbunden, wobei diese Luftführung in der das Felgenbett tragende Radschüssel verläuft. Eine am Fahrzeugrad anschließende Bremse wird vom Druckgeber durchsetzt.

Das durch die Erfindung gelöste Problem ist hier nicht erkannt und auch nicht gelöst.

Schließlich wurde zum Stand der Technik noch die EP-A-0 265 296 ermittelt. Nach dieser Schrift besteht ein Luftkreislauf zwischen dem Reifeninnenraum eines Fahrzeugrades und einer stromaufwärts gelegenen Leitung, die in einem Teil angeordnet ist, das fest mit der Halterung des Fahrzeugrades verbunden ist. Der Luftkreislauf weist ein Rückschlagventil auf, das im Fahrzeugrad sitzt und das einerseits mit dem Reifeninnenraum über eine stromabwärts laufende Leitung verbunden ist. Anderseits ist das Rückschlagventil mit der stromaufwärts gelegenen Leitung durch einen Zwischendurchlaß verbunden, dem eine Drehkupplung zugeordnet ist; das Rückschlagventil und die stromabwärts liegende Leitung sind im Fahrzeugrad integriert; diese Anordnung macht den Luftkreislauf von außerhalb des Fahrzeugrades unsichtbar und macht sein Rückschlagventil und seine Verbindungsleitung zum Reifeninnenraum weniger verwundbar.

Das durch die Erfindung gelöste Problem ist auch hier nicht erkannt und nicht gelöst.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:

Fig. 1: ein Federbein eines Kraftfahrzeuges mit angeschlossenem Fahrzeugreifen im Längsschnitt;

Fig. 2, 3: zwei unterschiedliche Ausführungen von gegenüber Fig. 1 vergrößerten erfindungsgemäßen Details, u.a. mit einem Druckgeber und einem Signalaufnehmer im Schnitt;

Fig. 4: den Schnitt durch Fig. 3 nach deren Linie IV-IV, ohne Signalaufnehmer;

Fig. 5: einen Druckgeber im Längsschnitt.

Ein Fahrzeugrad 10 ist am unteren Teil eines Federbeines 12 eines nicht weiter dargestellten Kraftfahrzeuges festgelegt. Das Federbein 12 endet an einem Spurstangenhebel 14, unterhalb dessen ein Führungsgelenk 16 für einen Querlenker 18 zu erkennen ist.

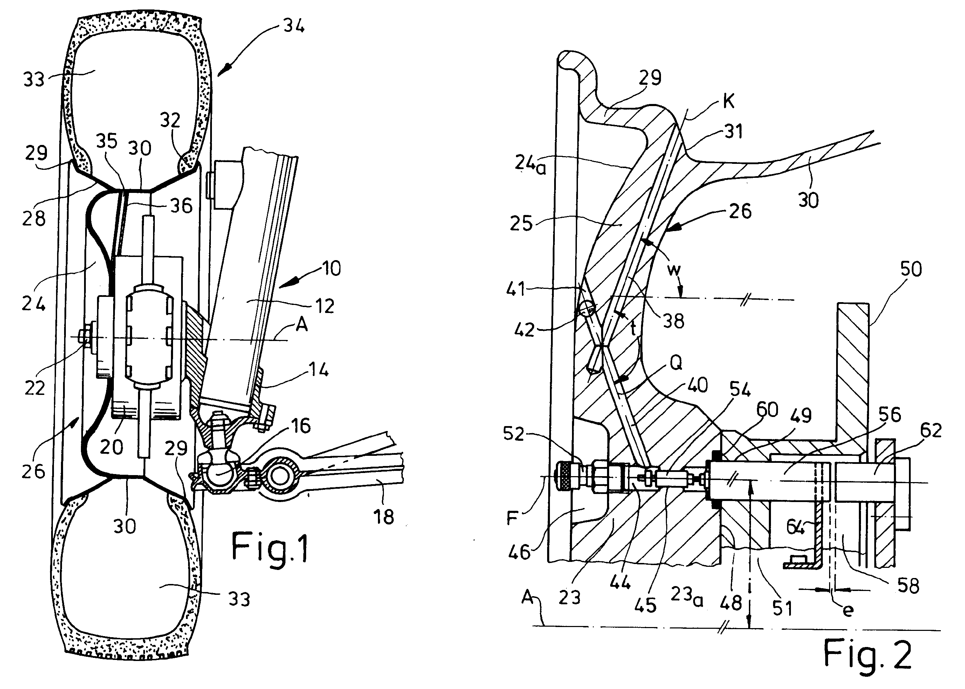

Das Fahrzeugrad 10 besteht nach Fig. 1 aus einer -- mit einer Radnabe 20 verschraubten und um einen Achszapfen 22 drehbaren -- Radschüssel 24 einer Felge 26 mit Felgenring 28, an dessen Felgenhörner 29 sich beidseits eines Felgenbettes 30 Randwulste 32 eines Luftreifens 34 anschmiegen. Dessen Schichtaufbau ist aus Gründen besserer Übersichtlichkeit in der Zeichnung vernachlässigt.

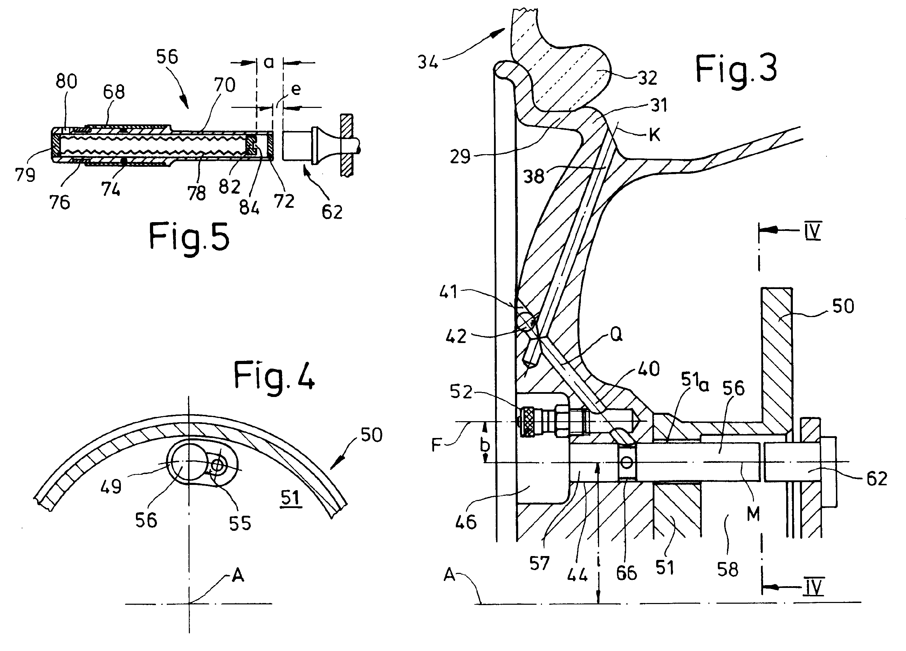

Im Felgenbett 30 -- und damit im Reifeninnenraum 33 des Luftreifens 34 -- endet an einer Stelle 35 eine Leitung 36, die anderseits an einen in Fig. 1 nicht erkennbaren Druckgeber angeschlossen ist. Entsprechend mündet in Fig. 2, 3 im Bereich eines stufenartigen Absatzes 31 des nach außen weisenden Felgenhornes $29_a$ der Felge 26 in das Felgenbett 30 ein Kanal 38.

Die Leitung 36 ist beispielsweise als punktweise im Felgenbereich festliegender Schlauch ausgebildet, der Kanal 38 jedoch in die Wandung 25 der Radschüssel 24 -- durch einen Bohrvorgang eingeformt. Die Kanalachse K verläuft im dargestellten Ausführungsbeispiel zur Radachse A in einem Neigungswinkel w von etwa 70° und schließt mit der Achse Q einer den Kanal 38 kreuzenden Bohrung 40 einen Winkel t von hier etwa 140° ein. Die Ausgestaltung dieser Luftführung aus Kanal 38 und Bohrung 40 hängt von der jeweiligen Form der Radschüssel 24 ab, in der beide Führungsabschnitte -- Kanal 38, Bohrung 40 -- verlaufen.

Die Bohrung 40 endet einerseits an einer Stelle 41 an der Schüsselsichtseite $24_a$, wo sie mit einem Verschlußorgan 42 versehen ist, und anderseits in einer Einsatzbohrung 44, die parallel zur Radachse A einen zentrischen Radschüsselkörper 23 durchsetzt und deren Mittellinie M zur Radachse A in einem kurzen Radialabstand i verläuft.

Die Einsatzbohrung 44 geht von einer Einformung 46 an der Schüsselsichtseite $24_a$ aus und endet an einer zentrischen Innenfläche $23_a$ des Radschüsselkörpers 23, der eine Anschlußfläche 48 einer Bremsscheibe 50 anliegt. Statt letzterer kann hier auch ein drehendes Teil einer Trommelbremse vorgesehen sein.

In der Einsatzbohrung 44 sitzt ein im Bereich der Einformung 46 frontwärts herausragendes Füllventil 52. Neben diesem ist in einem engeren Halsabschnitt 45 der Einsatzbohrung 44 ein koaxiales Rückschlagventil als Ventileinsatz 54 zu erkennen, dem ebenfalls koaxial ein Druckgeber 56 folgt. Dieser lagert fest in einer Bohrung 49 der Bremsscheibe 50 bzw. eines Sockels 51 der Bremsscheibe 50 und ist am Austritt aus dem Radschüsselkörper 23 von einem O-Ring 60 umfangen.

Der Ventileinsatz 54 dichtet die Luftführung -- unabhängig vom Füllventil 52 -- ab, und über den O-Ring 60 wird eine druckdichte Verbindung zwischen dem Kanal 38 bzw. der Felgenbohrung 40 sowie dem Druckgeber 56 nach der Radmontage erreicht.

Dem mit dem Fahrzeugrad 10 drehenden und in eine Bremsscheibenkammer 58 einragenden Druckgeber 56 steht an seinem anderen Ende in einem geringen Spaltabstand e ein am Fahrzeug stationärer Signalaufnehmer 62 gegenüber, der an eine nicht wiedergegebene Auswertungschaltung angeschlossen ist.

Bei 64 ist eine Zahnscheibe für ein aus Gründen der Übersichtlichkeit in der Zeichnung ansonsten vernachlässigtes Antiblockiersystem angedeutet, durch deren Zähne der Druckgeber 56 hindurchgreift.

Der Druckgeber 56 ist sehr nahe an der Radachse A -- vorzugsweise auf dem Lochkreis der hier nicht dargestellten Radbefestigungsschrauben -- achsparallel angeordnet sowie in den Sockel 51 als Teil der Bremsscheibe 50 so fest eingelassen, daß er nur geringfügig zum Radschüsselkörper 23 hin hervorsteht. Die im Reifeninnenraum 33 vorhandene Luft und damit der zu messende Reifendruck wird über die Leitung 36 bzw. den Kanal 38/40 der Felge 26 sowie über den Ventileinsatz 54 in den Druckgeber 56 geleitet. Hier wird der Reifendruck in eine andere physikalische Größe umgewandelt, beispielsweise in Magnetkraft.

In Fig. 3 kreuzt das Füllventil 52 die schräge Felgenbohrung 40 so, daß die Ventilachse F im Abstand b zur Mittellinie M der Einsatzbohrung 44 verläuft. Die Felgenbohrung 40 mündet ihrerseits in einer Umfangsnut 66 des fest in der Felge 26 sitzenden -- und damit dichtenden -- Druckgebers 56, dessen Endstück 57 die Einsatzbohrung 44 zur Einformung 46 hin verschließt. Der Druckgeber 56 liegt also hier fest und durchragt die Bohrung 49 der Bremsscheibe 50 mit Spiel (51a).

Der Druckgeber 56 ist beispielsweise gemäß Fig. 5 zu seiner Festlegung mit einer Außenhülse 68 ausgestattet, in der ein Druckrohr 70 sitzt. Zwischen der Außenhülse 68 und dem an seinem freien Ende durch eine Platte 72 geschlossenen Druckrohr 70 befindet sich ein dichtender 0-Ring 74. Das Druckrohr 70 wird durch einen Rastring 76 in jener Außenhülse 68 festgelegt. Nicht dargestellt ist eine Wärmeschutzhülse, die den Druckgeber 56 umgeben kann, um im Nabenbereich entstehende Hitze von ihm fernzuhalten.

Im Druckrohr 70 verläuft nach Fig. 5 ein Metallfaltenbalg 78, der einends an einem Faltenbalghalter 79 festliegt und über einen Druckrohrdurchbruch 80 mit dem Reifendruck beaufschlagt wird. Hierdurch wird ein am Faltenbalg 78 endwärts in einem plattenartigen Magnethalter 82 befestigter Permanentmagnet 84 in axialer Richtung bewegt. Diesem steht ein sog. Referenzmagnet 55 außerhalb des Druckrohres 70 gegenüber. Der feststehende Signalaufnehmer 62 empfängt die druckabhängigen Signale und wandelt sie in eine druckabhängige elektrische Größe um, die dann im Fahrzeug weiterverarbeitet werden kann. Die auf den Signalaufnehmer 62 wirkende magnetische Feldstärke ist abhängig von der Distanz a zwischen dem Permanentmagneten 84 und dem Signalaufnehmer oder Magnetfeldsensor 62. An ihm werden bei rotierendem Reifen Impulse erzeugt, deren Amplitudenhöhe dem Reifendruck entsprechend ist.

Der Ventileinsatz 54 dient zum automatischen Absperren des Kanals 38 bei Demontage des Fahrzeugrades 10, um ein Abströmen von Reifenluft durch den Kanal 38 bei demontiertem Rad zu unterbinden; beim Festlegen des Fahrzeugrades 10 am Fahrzeug öffnet dann der Druckgeber 56 den Ventileinsatz 54. Es wird deutlich, daß das Drucküberwachungssystem vom Füllventil 52 unabhängig funktioniert sowie die achsnahe Position dieses Füllventils eine -- zur Drucküberwachung -- zusätzliche Verbesserung für dieses anbietet.

Positions-Zahlen-Liste List of reference numbers

| Pos. | Benennung / Designation | Pos. | Benennung / Designation | |
|---|---|---|---|---|
| 1 | | 51 | Sockel v. 50 | A= Radachse |
| 2 | | 52 | Füllventil | F= Ventilachse v. 44 |
| 3 | | 53 | | M= Mittellinie v. 44 |
| 4 | | 54 | Ventileinsatz | K= Kanalachse v. 38 |
| 5 | | 55 | Referenzmagnet | Q= Achse v. 40 |
| 6 | | 56 | Druckgeber | |
| 7 | | 57 | Endstück v. 56 | a= Distanz |
| 8 | | 58 | Bremsscheibenkammer | b= Abstand F/M |
| 9 | | 59 | | e= Spaltabstand |
| 10 | Fahrzeugrad | 60 | O-Ring | i= Radialabstand F/A |
| 11 | | 61 | | t= Winkel Q/K |
| 12 | Federbein | 62 | Signalaufnehmer | w= Neigungswinkel A/K |
| 13 | | 63 | | |
| 14 | Spurstangenhebel | 64 | Zahnschiebe | |
| 15 | | 65 | Umfangsnut | |
| 16 | Führungsgelenk | 66 | | |
| 17 | | 67 | | |
| 18 | Querlenker | 68 | Außenhülse | |
| 19 | | 69 | | |
| 20 | Radnabe | 70 | Druckrohr | |
| 21 | | 71 | | |
| 22 | Achszapfen | 72 | Platte v. 70 | |
| 23 | Radschüsselkörper zentrisch | 73 | | 23a= zentr. Innenfläche v. 23 |
| 24 | Radschüssel | 74 | O-Ring | 24a= Schüsselsichtseite |
| 25 | Wandung v. 24 | 75 | | |
| 26 | Felge | 76 | Rastring | 51a= Spiel |
| 27 | | 77 | | |
| 28 | Felgenring | 78 | Metallfaltenbalg | |
| 29 | Felgenhörner | 79 | Faltenbalghalter | |
| 30 | Felgenbett | 80 | Druckrohrdurchbruch | |
| 31 | Absatz stufenartig | 81 | | |
| 32 | Randwulste | 82 | Magnethalter | |
| 33 | Reifeninnenraum | 83 | | |
| 34 | Luftreifen | 84 | Permanentmagnet | |
| 35 | Endstelle v. 36 | 85 | | |
| 36 | Leitung | 86 | | |
| 37 | | 87 | | |
| 38 | Kanal | 88 | | |
| 39 | | 89 | | |
| 40 | Felgenbohrung | 90 | | |
| 41 | | | | |
| 42 | Verschlußorgan | | | |
| 43 | | | | |
| 44 | Einsatzbohrung | | | |
| 45 | Halsabschnitt v. 44 | | | |
| 46 | Einformung | | | |
| 47 | | | | |
| 48 | Anschlußfläche | | | |
| 49 | Bohrung v. 50 | | | |
| 50 | Bremsscheibe | | | |

**Patentansprüche**

1. Vorrichtung zum Überwachen des Luftdruckes im Reifeninnenraum (33) eines von der Felge (26) eines Fahrzeugrades (10) getragenen Luftreifens (34) mit einem vom Reifendruck beaufschlagbaren Druck- oder Meßwertgeber (56), in dessen Umlaufbereich ein stationär am Fahrzeug festliegender Meßwertgebersensor od.dgl. Signalaufnehmer (62) angeordnet ist, wobei der Druck- oder Meßwertgeber (56) nahe der Radachse (A) angeordnet und mit dem Reifeninnenraum (33) durch wenigstens eine an oder in der Felge (26) verlaufende Luftführung (36; 38, 40) verbunden ist, die nahe der Radachse (A) in einer zu dieser etwa parallel verlaufenden Einsatzbohrung (44) endet, an welche der Druckgeber (56) angeschlossen ist, und wobei der Druckgeber (56) im Radschüsselkörper (23) der Felge (26) festliegt und eine daran anschließende mit drehende Bremseinrichtung (50) durchsetzt,
   dadurch gekennzeichnet,
   daß die vom Felgenbett (30) ausgehende Luftführung als Kanal (38) in eine von der Felgenaußenseite (24a) zur Radachse (A) hin verlaufende, an ihrem achsfernen Ende (41) verschlossene Bohrung (40) mündet, die anderseits in der Einsatzbohrung (44) mündet, in der das Füllventil (52) sitzt.

2. Vorrichtung nach Anspruch 1, dadurch gekennzeichnet, daß der Druckgeber (56) dadurch sehr nahe an der Radachse (A) achsparallel angeordnet ist, daß er auf dem Lochkreis der Radbefestigungsscheiben liegt.

3. Vorrichtung nach Anspruch 1 oder 2, dadurch gekennzeichnet, daß Reifeninnenraum (33), Leitung (36) bzw. Kanal (38, 40) und die Einsatzbohrung (44) einen geschlossenen Druckraum bilden, wobei der reifenseitige Druckraum bei demontiertem Fahrzeugrad (10) von dem Ventileinsatz (54) druckdicht verschlossen ist.

4. Vorrichtung nach einem der vorhergehenden Ansprüche, dadurch gekennzeichnet, daß das in der Einsatzbohrung (44) sitzende Füllventil (52) mit dem Ventileinsatz (54) koaxial zum Druckgeber (56) verläuft, und/oder daß der Druckraum (33; 36; 38; 40; 44) durch den Druckgeber (56) geschlossen ist.

5. Vorrichtung nach einem der vorhergehenden Ansprüche, dadurch gekennzeichnet, daß der Druckgeber (56) im Radschüsselkörper (23) von einer Dichtung (60) der Einsatzbohrung (44) umgeben ist.

6. Vorrichtung nach einem der vorhergehenden Ansprüche, dadurch gekennzeichnet, daß der Druckgeber (56) eine Zahnscheibe (64) od.dgl. eines Antiblockiersystems durchsetzt.

7. Vorrichtung nach einem der vorhergehenden Ansprüche, dadurch gekennzeichnet, daß alternativ das Füllventil (52) außerhalb der Einsatzbohrung (44) in den Kanal (38, 40) einragt.

8. Vorrichtung nach einem der vorhergehenden Ansprüche, dadurch gekennzeichnet, daß das Füllventil (52) in einer Einformung (46) an der Sichtseite der Radschüssel (24) achsnah vorgesehen ist.

9. Vorrichtung nach einem der vorhergehenden Ansprüche dadurch gekennzeichnet, daß der Druckgeber (56) von einer wärmedämmenden Hülse umgeben ist.

**Claims**

1. Device for controlling the pressure in the interior (33) of a tyre (34) carried by the rim (26) of a vehicle wheel (10), comprising a pressure or measuring transducer (56) subjected to the tyre pressure, in the circumferential region of which a sensor or a similar signal sensing element (62) rigidly fixed to the vehicle is arranged, the pressure or measuring transducer (56) being arranged close to the wheel axis (A) and being connected to the interior (33) of the tyre by at least one air duct (36; 38, 40) which extends on or in the rim (26) and ends close to the wheel axis (A) in an insertion bore (44) extending substantially parallel thereto, to which the pressure transducer (56) is connected, and the pressure transducer (56) being fixed in the wheel disc (23) of the rim (26) and traversing a braking device (50) connected thereto and rotating therewith, characterised in that the air duct departing from the rim well (30) opens in the form of a channel (38) into a bore (40) extending from the outer face (24a) of the rim to the wheel axis (A) and closed at its

6

end (41) remote from the axis, said bore opening at its other end into the insertion bore (44) in which the filling valve (52) is seated.

2. Device according to claim 1, characterised in that the pressure transducer (56) is arranged in an axially parallel manner very close to the wheel axis (A) in that it is situated on the hole circle of the wheel mounting discs.

3. Device according to claim 1 or claim 2, characterised in that the interior (33) of the tyre, the line (36) or channel (38, 40) and the insertion bore (44) form a closed pressure chamber, the pressure chamber being closed in a pressure-tight manner at the tyre side by the valve insert (54) when the vehicle wheel (10) is removed.

4. Device according to one of the preceding claims, characterised in that the filling valve (52) seated in the insertion bore (44) extends coaxially with the pressure transducer (56) together with the valve insert (54) and/or that the pressure chamber (33; 36; 38; 40; 44) is closed by the pressure transducer (56).

5. Device according to one of the preceding claims, characterised in that the pressure transducer (56) is surrounded in the wheel disc (23) by a seal (60) of the insertion bore (44).

6. Device according to one of the preceding claims, characterised in that the pressure transducer (56) traverses a tooth lock washer (64) or the like of an ABS braking device.

7. Device according to one of the preceding claims, characterised in that, alternatively, the filing valve (52) projects into the channel (38) outside the insertion bore (44).

8. Device according to one of the preceding claims, characterised in that the filling valve (52) is provided close to the axis in a recess (46) formed on the visible side of the wheel disc (24).

9. Device according to one of the preceding claims, characterised in that the pressure transducer (56) is surrounded by a heat-insulating sleeve.

**Revendications**

1. Dispositif pour surveiller la pression d'air dans la chambre intérieure (33) d'un pneumatique (34) porté par la jante (26) d'une roue de véhicule (10), comprenant un capteur de pression ou de valeur de mesure (56) pouvant être sollicité par la pression du pneumatique, et dans la zone de révolution duquel est disposé un détecteur de valeur de mesure ou autre détecteur de signal (62) similaire, fixé de manière stationnaire sur le véhicule, le capteur (56) de pression ou de valeur de mesure étant disposé à proximité de l'axe de roue (A), et relié à la chambre intérieure de pneumatique (33) par au moins un guidage d'air (36; 38, 40) qui s'étend sur ou dans la jante (26), et qui, à proximité de l'axe de roue (A), se termine dans un alésage d'insertion (44) qui s'étend sensiblement de manière parallèle à cet axe, et auquel est raccordé le capteur de pression (56), et ce capteur de pression (56) étant fixe dans le corps de voile de roue (23) de la jante (26), et traversant un dispositif de freinage (50) qui se raccorde à ce corps de voile de roue et qui tourne avec celui-ci,
caractérisé
en ce que le guidage d'air partant de la base de jante (30) débouche en tant que canal (38), dans un perçage (40) qui s'étend du côté extérieur (24a) de la jante en direction de l'axe de roue (A), qui est obturé à son extrémité éloignée de l'axe, et qui d'autre part débouche dans l'alésage d'insertion (44) dans lequel est disposée la valve de remplissage (52).

2. Dispositif selon la revendication 1, caractérisé en ce que le capteur de pression (56) est disposé très près de l'axe de roue (A), parallèlement à celui-ci, par le fait qu'il se situe sur le cercle de perçage des vis de fixation de la roue.

3. Dispositif selon la revendication 1 ou 2, caractérisé en ce que la chambre intérieure de pneumatique (33), la conduite (36) ou le canal (38, 40), et l'alésage d'insertion (44) forment une chambre de pression fermée, la chambre de pression côté pneumatique étant fermée de manière étanche à la pression par l'insert de soupape (54), lorsque la roue de véhicule (10) est démontée.

7

4. Dispositif selon l'une des revendications précédentes, caractérisé en ce que la valve de remplissage (52) montée dans l'alésage d'insertion (44), s'étend, en commun avec l'insert de soupape (54), coaxialement au capteur de pression (56), et/ou la chambre de pression (33; 36; 38; 40; 44) est fermée par le capteur de pression (56).

5. Dispositif selon l'une des revendications précédentes, caractérisé en ce que le capteur de pression (56) est entouré, dans le corps de voile de roue (23), par un joint d'étanchéité (60) de l'alésage d'insertion (44).

6. Dispositif selon l'une des revendications précédentes, caractérisé en ce que le capteur de pression (56) traverse un disque denté (64) ou élément similaire d'un système anti-blocage.

7. Dispositif selon l'une des revendications précédentes, caractérisé en ce qu'en variante, la valve de remplissage (52) pénètre dans le canal (38, 40), en-dehors de l'alésage d'insertion (44).

8. Dispositif selon l'une des revendications précédentes, caractérisé en ce que la valve de remplissage (52) est prévue dans une empreinte en creux (46) sur la face visible du voile de roue (24), à proximité de l'axe.

9. Dispositif selon l'une des revendications précédentes caractérisé en ce que le capteur de pression (56) est enveloppé d'un fourreau d'isolation thermique.

Fig. 2

Fig.1

Fig.5

Fig.4

Fig.3

EP 0 503 296 B1